# EUROPEAN PATENT APPLICATION

(11) **EP 4 310 119 A1**
(43) Date of publication of application: **24.01.2024**
(21) Application number: 21890367.2
(22) Date of filing: 20.10.2021
(51) Int. Cl.: C08F 290/06, C08F 220/18, C08F 222/10, C08F 2/50, C08G 77/20, C08G 77/18, C08K 5/544, C08K 5/5415, C08K 3/36

(54) **SILICONE-BASED COMPOSITION AND CURED PRODUCT THEREOF**

(30) Priority: 16.03.2021 KR 20210034102
(71) Applicant: Momentive Performance Materials Korea Co., Ltd., Seoul 08510 (KR)
(72) Inventor: LEE, Jinhyouk, Gyeonggi-do (KR); LEE, Sangjae, Gyeonggi-do (KR); ONO, Kazuhisa, Gunma (JP); BASAB, Roy, West Bengal (IN); OKAWA, Koji, Gunma (JP)
(74) Representative: Goddar, Heinz J.
(86) International application number: PCT/KR2021/014729
(87) International publication number: WO 2022/196878

(57) **Abstract**

A silicone-based composition according to one embodiment of the present application comprises a polyorganosiloxane having both ends formed with an acrylate group and comprising at least one alkoxy group; at least one type of an acryl-based monomer; at least one type of a photoinitiator; and a catalyst for moisture curing.

## Description

### [Technical Field]

This application claims priority to and the benefits of Korean Patent Application No. 10-2021-0034102, filed with the Korean Intellectual Property Office on March 16, 2021, the entire contents of which are incorporated herein by reference.

The present application relates to a silicone-based composition capable of dual curing by ultraviolet (UV) irradiation and moisture, and a cured product thereof.

### [Background Art]

The present disclosure relates to a composition in which silicone is cured through a dual curing process of photocuring by irradiation of light in an ultraviolet region (UV) and condensation curing by moisture present in the air, and an application thereof.

In existing curing through UV irradiation, photocuring has not been obtained for areas not covered by UV. In view of the above, a process of irradiating UV several times at various angles has been conducted, however, despite quick curability of UV in the process operation, the process time relatively increases since UV needs to be irradiated at various angles and an UV irradiator becomes complicated for angle control. However, despite such a process, there has been a problem in that curing is not sufficiently completed since areas not irradiated by UV are still present. In addition, due to low surface tension and low refractive index, which are properties of silicone, the use of a photoinitiator widely used in the field has been inevitably limited, and methods of curing with UV have been limited.

### [Disclosure]

### [Technical Problem]

The present application is directed to providing a silicone-based composition capable of quick curing using ultraviolet light (UV), and capable of curing using a moisture curing method even for an area not irradiated with ultraviolet light, and a cured product thereof.

### [Technical Solution]

One embodiment of the present application provides a silicone-based composition comprising
a polyorganosiloxane having both ends formed with an acrylate group and comprising at least one alkoxy group in 40% by weight or greater,
at least one type of an acryl-based monomer in 0.1% by weight to 50% by weight;
at least one type of a photoinitiator in 0.1% by weight to 5% by weight; and
a catalyst for moisture curing,
based on a total weight of the silicone-based composition.

Another embodiment of the present application provides a cured product prepared by curing the silicone-based composition.

Another embodiment of the present application provides a device comprising the cured product.

### [Advantageous Effects]

A silicone-based composition according to one embodiment of the present application is capable of quick curing using ultraviolet (UV) light, and is capable of sufficient curing using a moisture curing method even for areas not irradiated with ultraviolet light.

In addition, by comprising both a polyorganosiloxane having both ends formed with an acrylate group and comprising at least one alkoxy group; and at least one type of an acryl-based monomer, the silicone-based composition according to one embodiment of the present application can have properties of silicone rubber, can control variously adhesive strength, and can provide a quick tack free time on the surface just by moisture curing.

### [Mode for Disclosure]

Hereinafter, the present application will be described in detail.

With silicone materials curable just by ultraviolet irradiation, curing has not been obtained for areas not covered by ultraviolet light. In view of the above, ultraviolet light needed to be irradiated several times at various angles, and rapidly conducting a curing process has not been possible. In addition, the use of a photoinitiator has been limited due to low surface tension and refractive index of silicone materials, and therefore, curability for ultraviolet light has not been favorable as well.

In order to rapidly conduct a process in an actual field, a composition needs to quickly have a property of non-fluidity after ultraviolet irradiation, and in addition thereto, curing needs to be proceeding quickly even for areas not covered by light.

Accordingly, the present application is directed to providing a silicone-based composition capable of quick curing using ultraviolet (UV) light, and capable of curing using a moisture curing method even for areas not irradiated with ultraviolet light, and a cured product thereof.

The silicone-based composition according to one embodiment of the present application comprises a polyorganosiloxane having both ends formed with an acrylate group and comprising at least one alkoxy group; at least one type of an acryl-based monomer; at least one type of a photoinitiator; and a catalyst for moisture curing.

The silicone-based composition according to one embodiment of the present application is mainly cured through ultraviolet light first, and the curing can be completed with a moisture curing mechanism. In other words, the silicone-based composition quickly has a property of non-fluidity by ultraviolet irradiation, and after that, the curing can be quickly completed by moisture at room temperature. Accordingly, switching to a next process can be fast in an actual field by irradiating ultraviolet light, and processes such as additional heating and ultraviolet re-radiation are not required at all to completely cure the composition.

In addition, according to one embodiment of the present application, curing can be achieved without an additional ultraviolet irradiation process using a moisture curing mechanism even for areas not covered by ultraviolet light. In addition, the moisture curing mechanism can also be conducted alone with a fast tack free time.

In one embodiment of the present application, the polyorganosiloxane having both ends formed with an acrylate group and comprising at least one alkoxy group is a polyorganosiloxane comprising an ultraviolet curable functional group and a moisture curable functional group at the same time. More specifically, the polyorganosiloxane has both ends formed with an acrylate group as an ultraviolet curable functional group, and comprises at least one alkoxy group in the polyorganosiloxane as a moisture curable functional group.

Particularly, the polyorganosiloxane according to one embodiment of the present application has both ends formed with an acrylate group, and, compared to a polyorganosiloxane having both ends formed with a methacrylate group instead of an acrylate group, a more solid level of hardness properties can be obtained. In addition, when a polyorganosiloxane has one end formed with an acrylate group and the other end formed with an epoxy group, higher ultraviolet intensity is required, and a tack free time in the area not irradiated with ultraviolet light becomes slow making it difficult to expect an effect of process improvement.

In other words, by comprising a polyorganosiloxane having both ends formed with an acrylate group and comprising at least one alkoxy group, the silicone-based composition according to one embodiment of the present application can be rapidly cured using ultraviolet (UV) light, and can be sufficiently cured using a moisture curing method even for areas not irradiated with ultraviolet light.

In one embodiment of the present application, the polyorganosiloxane can be represented by the following Chemical Formula 1.

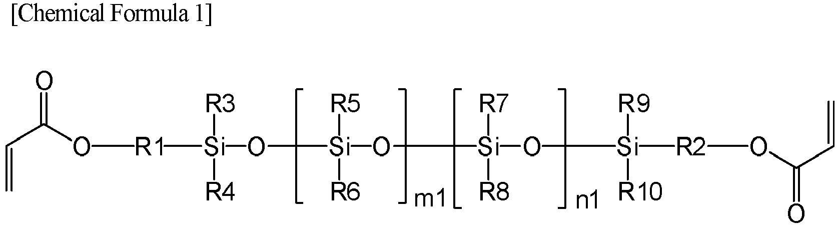

In Chemical Formula 1,
R1 and R2 are the same as or different from each other, and each independently a substituted or unsubstituted alkylene group having 1 to 10 carbon atoms,
R5 and R6 are the same as or different from each other, and each independently an alkyl group having 1 to 10 carbon atoms,
at least one of R3, R4, R9 and R10 is an alkoxy group having 1 to 10 carbon atoms, and the rest are the same as or different from each other, and each independently an alkyl group having 1 to 10 carbon atoms, or an alkoxy group having 1 to 10 carbon atoms,
R7 and R8 are the same as or different from each other, and each independently an aryl group having 6 to 20 carbon atoms, and
m1 and n1 are each independently a real number of 0 or greater.

Examples of substituents in the present application are described below, however, the substituents are not limited thereto.

The term "substitution" means a hydrogen atom bonding to a carbon atom of a compound being changed to another substituent, and the position of substitution is not limited as long as it is a position at which the hydrogen atom is substituted, that is, a position at which a substituent can substitute, and when two or more substituents substitute, the two or more substituents can be the same as or different from each other.

In the present application, the term "substituted or unsubstituted" means being substituted with one, two or more substituents selected from the group consisting of a halogen group; a nitrile group; a hydroxy group; an alkoxy group; an alkyl group; a cycloalkyl group; an aryl group; and a heterocyclic group, or being substituted with a substituent linking two or more of the substituents illustrated above, or having no substituents.

In one embodiment of the present application, the alkyl group can be linear, branched or cyclic, and preferably has 1 to 10 carbon atoms. Specific examples thereof can comprise a methyl group, an ethyl group, a propyl group, an n-propyl group, an isopropyl group, a butyl group, an n-butyl group, an isobutyl group, a tert-butyl group, a see-butyl group, a 1-methyl-butyl group, a 1-ethyl-butyl group, a pentyl group, an n-pentyl group, a cyclopentyl group, an isopentyl group, a neopentyl group, a tert-pentyl group, a hexyl group, an n-hexyl group, a cyclohexyl group, a 1-methylpentyl group, a 2-methylpentyl group, a 4-methyl-2-pentyl group, a 3,3-dimethylbutyl group, a 2-ethylbutyl group, a heptyl group, an n-heptyl group, a 1-methylhexyl group, a cyclopentylmethyl group, a cyclohexylmethyl group, an octyl group, an n-octyl group, a tert-octyl group, a 1-methylheptyl group, a 2-ethylhexyl group, a 2-propylpentyl group, an n-nonyl group, a 2,2-dimethylheptyl group, a 1-ethyl-propyl group, a 1,1-dimethyl-propyl group, an isohexyl group, a 2-methylpentyl group, a 4-methylhexyl group, a 5-methylhexyl group and the like, but are not limited thereto.

In one embodiment of the present application, the alkoxy group can be linear, branched or cyclic, and preferably has 1 to 10 carbon atoms. Specific examples thereof can comprise a methoxy group, an ethoxy group, an n-propoxy group, an isopropoxy group, an i-propyloxy group, an n-butoxy group, an isobutoxy group, a tert-butoxy group, a sec-butoxy group, an n-pentyloxy group, a neopentyloxy group, an isopentyloxy group, an n-hexyloxy group, a 3,3-dimethylbutyloxy group, a 2-ethylbutyloxy group, an n-octyloxy group, an n-nonyloxy group, an n-decyloxy group, a benzyloxy group, a p-methylbenzyloxy group and the like, but are not limited thereto.

In one embodiment of the present application, the aryl group can be monocyclic or polycyclic, and preferably has 6 to 20 carbon atoms. Specific examples thereof can comprise a phenyl group, a biphenyl group, a terphenyl group, a naphthyl group, a triphenylenyl group, an anthracenyl group, a phenanthryl group, a pyrenyl group, a perylenyl group, a chrysenyl group, a fluorenyl group and the like, but are not limited thereto.

In one embodiment of the present application, the alkyl group described above can be applied to the alkylene group except for being a divalent group.

In one embodiment of the present application, in Chemical Formula 1, m1 can be a real number of 1 or greater, and n1 is 0 or a real number of 1 or greater.

In one embodiment of the present application, Chemical Formula 1 can be represented by the following Chemical Formula 2 or 3.

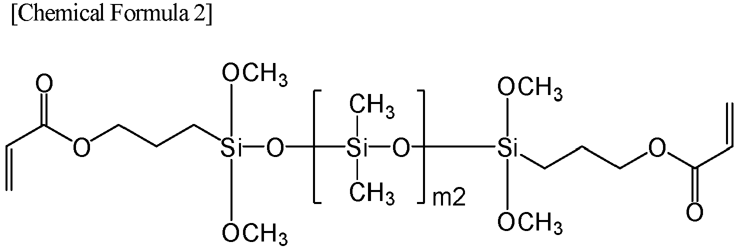

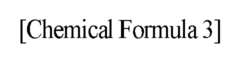

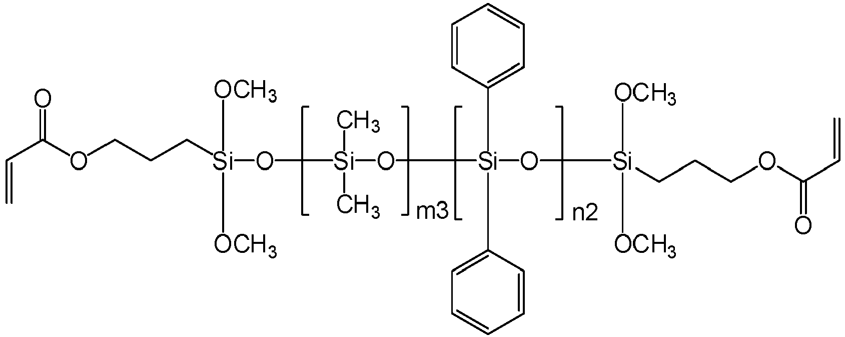

In Chemical Formulae 2 and 3,
m2, m3 and n2 are each independently a real number of 1 or greater.

In one embodiment of the present application, viscosity of the polyorganosiloxane can be from 10 cps to 100,000 cps, or from 100 cps to 80,000 cps based on 23°C.

The viscosity can be measured using any proper method comprising a method of using a rheometer. For example, the viscosity can be measured at 20 rpm under a condition of 23°C after setting to gap=0.5 mm using a spindle PP-25 of Anton-Paar rheometer.

In one embodiment of the present application, m1, m2, m3, n1 and n2 of Chemical Formulae 1 to 3 are values that the polyorganosiloxane of Chemical Formulae 1 to 3 has desirable viscosity. More specifically, m1, m2, m3, n1 and n2 of Chemical Formulae 1 to 3 are values that the polyorganosiloxane of Chemical Formulae 1 to 3 has viscosity of 10 cps to 100,000 cps based on 23°C.

In one embodiment of the present application, a content of the polyorganosiloxane can be from 40% by weight to 98% by weight, or from 50% by weight to 95% by weight based on a total weight of the silicone-based composition. When satisfying such a content range of the polyorganosiloxane, the silicone-based composition of the present application can have properties of silicone rubber, can diversely control adhesive strength, and can provide a fast tack free time on the surface just by moisture curing. In addition, the polyorganosiloxane content being less than 40% by weight based on the total weight of the silicone-based composition is not preferred since a cured product of the silicone-based composition becomes hard causing a problem of being very readily broken and thereby causing an issue of cracks, and rubber properties of silicone are lost.

As described above, the use of a photoinitiator has been limited in the art due to low surface tension and refractive index of silicone materials, and curability for ultraviolet light has been poor as well. In view of the above, an acryl-based monomer that is a diluent is comprised in one embodiment of the present application in order to smoothly mix the polyorganosiloxane and a photoinitiator. In one embodiment of the present application, the acryl-based monomer not only serves as a diluent, but also serves to increase curability for ultraviolet light.

As the acryl-based monomer, acryl-based monomers known in the art can also be used as long as they are materials that can be sufficiently mixed with the polyorganosiloxane. Particularly, as the acryl-based monomer, at least one type of isobomyl acrylate, lauryl acrylate and 1,6-hexanediol diacrylate is preferably comprised, however, the acryl-based monomer is not limited thereto. The acryl-based monomer described above is advantageous for mixing with the polyorganosiloxane by having low molecular weight and surface tension, and not having high refractive index, and is advantageous for revealing rubber properties of silicone. In addition, by adjusting the content of the acryl-based monomer in the silicone-based composition, changes in various properties of the silicone-based composition can be obtained.

In one embodiment of the present application, a content of the acryl-based monomer can be from 0.1% by weight to 50% by weight, and more preferably from 1% by weight to 46% by weight based on the total weight of the silicone-based composition.

When satisfying such a content range of the acryl-based monomer, the silicone-based composition of the present application can have properties of silicone rubber, can diversely control adhesive strength, and can provide a fast tack free time on the surface just by moisture curing. In addition, the acryl-based monomer content being greater than 50% by weight based on the total weight of the silicone-based composition is not preferred since the polyorganosiloxane content relatively decreases, and a cured product of the silicone-based composition becomes hard causing a problem of being very readily broken and thereby causing an issue of cracks, and rubber properties of silicone are lost.

In one embodiment of the present application, the photoinitiator is thermally inactive, but is excited by receiving light to generate free radicals, and these free radicals provide excitation energy to the siloxane to initiate a curing reaction by ultraviolet curing. From the viewpoint of reactivity, the photoinitiator can comprise aromatic hydrocarbon, acetophenone and derivatives thereof, benzophenone and derivatives thereof, o-benzoyl benzoic acid ester, benzoin, benzoin ether and derivatives thereof, xanthone and derivatives thereof, quinone compounds, halogenated hydrocarbon and amines, organic peroxides and the like, and from the viewpoint of compatibility with silicone and stability, compounds containing a substituted or unsubstituted benzoyl group or organic peroxides are more preferred. Examples thereof can comprise acetophenone, propiophenone, 2-hydroxy-2-methylpropiophenone, 2,2-dimethoxy-1,2-diphenylethan-1 -one, 2-hydroxy-2-methyl-1-phenyl-propan-1-one, 1-hydroxycyclohexyl-phenyl-ketone, ethyl(2,4,6-trimethylbenzoyl)phenylphosphinate, 1-[4-(2-hydroxyethoxy)-phenyl]-2-hydroxy-2-methyl-1-propan-1-one, 2-hydroxy-1 - {4-[4-(2-hydroxy-2-methyl-propionyl)-benzyl]phenyl } -2-methyl-propan-1 -one, 2-methyl-1 -(4-methylthiophenyl)-2-morpholinopropan-1 -one, 2-benzyl-2-dimethylamino-(4-morpholinophenyl)-butanone-1, 2-(dimethylamino)-2-[(4-methylphenyl)methyl]-1-[4-(4-morpholinyl)phenyl]-1-butanone, 2,4,6-trimethylbenzoyl-diphenylphosphine oxide, bis(2,4,6-trimethylbenzoyl)-phenylphosphine oxide, 1,2-octanedione, 1-[4-(phenylthio)-2-(O-benzoyloxime)], ethanone, 1-[9-ethyl-6-(2-methylbenzoyl)-9H-carbazol-3-yl]-1-(O-acetyloxime), oxyphenylacetic acid, 2-[2-oxo-2-phenylacetoxyethoxy]ethyl ester and oxyphenylacetic acid, 2-(2-hydroxyethoxy)ethyl ester mixture, ethyl-4-dimethylaminobenzoate, 2-ethylhexyl-4-dimethylaminobenzoate, bis(2,6-dimethoxybenzoyl)-2,4,4-trimethyl-pentylphosphine oxide, benzoyl peroxide and the like, but are not limited thereto.

In addition, the photoinitiator can be used in a form of a mixture dissolved in the above-described acryl-based monomer in terms of compatibility with the polyorganosiloxane.

In one embodiment of the present application, a content of the photoinitiator can be from 0.1% by weight to 5% by weight, and more preferably from 0.3% by weight to 3% by weight based on the total weight of the silicone-based composition.

When satisfying such a content range of the photoinitiator, the silicone-based composition of the present application can accomplish fast ultraviolet curing.

According to one embodiment of the present application, the silicone-based composition comprises a catalyst for moisture curing to provide a fast a tack free time on the surface. Particularly, according to one embodiment of the present application, the tack free time can be 60 minutes or shorter, 55 minutes or shorter, or 5 minutes or longer. When the tack free time is longer than 60 minutes, the goal of a fast curing process that the present application aims to accomplish is difficult to obtain. A method of measuring the tack free time is specifically described in an experimental example to describe later.

In one embodiment of the present application, the catalyst for moisture curing can comprise at least one of a tin-based compound and a titanate-based compound.

The tin-based compound used as the catalyst for moisture curing can comprise at least one type of dibutyltin dilaurate, dibutyltin diacetate, dibutyltin dimethoxide, dimethyltin di-neodecanoate, tin octoate, dibutyltin oxide, diorgano-tin bis β-diketonate and dibutyltin bis-acetylacetonate, but is not limited thereto.

The titanate-based compound used as the catalyst for moisture curing can comprise at least one type of tetra-tert-butyl orthotitanate, tetra-n-butyl titanate, tetra-isopropyl titanate, tetra-2-ethylhexyl titanate, tertra tert-butyl titanate, poly butyl titanate, butyl-titanate dimer, titanium acetylacetonate, titanium tetra-acetylacetonate, ethyl acetoacetate titanate, titanium dodecylbenzene sulfonate, titanium phosphate complex, titanium octyleneglycolate, titanium lactate ammonium salt, titanium lactate, titanium triethanolaminate, tetra stearyl titanate, titanium isostearate and titanium aminoethylaminoethanolate, but is not limited thereto.

In one embodiment of the present application, the catalyst for moisture curing comprises the tin-based compound, and a content of the tin-based compound can be from 0.05% by weight to 0.5% by weight, and more preferably from 0.07% by weight to 0.35% by weight based on the total weight of the silicone-based composition.

In one embodiment of the present application, the catalyst for moisture curing comprises the titanate-based compound, and a content of the titanate-based compound can be from 0.1% by weight to 5.0% by weight based on the total weight of the silicone-based composition.

When satisfying such content ranges of the catalyst for moisture curing, the silicone-based composition according to one embodiment of the present application can be sufficiently cured using a moisture curing method even for areas not irradiated with ultraviolet light.

In one embodiment of the present application, the silicone-based composition can further comprise an additive including at least one of a scavenger and an adhesion promoter.

In one embodiment of the present application, a scavenger described in European Patent Application Laid-Open Publication No. 0905195 can be used as the scavenger. More specifically, the scavenger can be 3-(trimethoxysilyl)-1-propanamine polymer with 1,1,1-trimethyl-N-(trimethylsilyl) silanamine represented by the following Chemical Formula 4, but is not limited thereto.

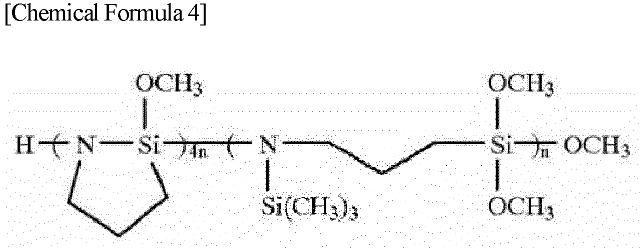

In Chemical Formula 4,
n is a real number of 1 to 20.

In one embodiment of the present application, a content of the scavenger can be from 0.1% by weight to 5% by weight, and more preferably from 0.7% by weight to 5% by weight based on the total weight of the silicone-based composition.

In one embodiment of the present application, as the adhesion promoter, silicone-based compounds or silane-based compounds comprising at least one hydrolysable functional group such as methoxy or ethoxy can be used.

The adhesion promoter can comprise at least one type of (aminoalkyl)trialkoxysilane, (aminoalkyl)alkyldialkoxysilane, bis(trialkoxysilylalkyl)amine, tris(trialkoxysilylalkyl)amine, tris(trialkoxysilylalkyl)cyanurate, tris(trialkoxysilylalkyl)isocyanurate, (epoxyalkyl)trialkoxysilane and (epoxyalkyl ether)trialkoxysilane, but is not limited thereto.

More specifically, the adhesion promoter can comprise at least one type of N-(2-aminoethyl)aminopropyltrimethoxysilane, gamma-aminopropyltriethoxysilane, gamma-aminopropyltrimethoxysilane, bis(3-trimethoxysilylpropyl)amine, N-phenyl-gamma-aminopropyltrimethoxysilane, triaminofunctionaltrimethoxysilane, gamma-aminopropylmethyldimethoxysilane, gamma-aminopropylmethyldiethoxysilane, methacryloxypropyltrimethoxysilane, methylaminopropyltrimethoxysilane, gamma-glycidoxypropylethyldimethoxysilane, gamma-glycidoxypropyltrimethoxysilane, gamma-glycidoxyethyltrimethoxysilane, gamma-glycidoxypropylmethyldimethoxysilane, gamma-glycidoxypropylmethyldiethoxysilane, beta-(3,4-epoxycyclohexyl)ethyltrimethoxy silane, beta-(3,4-epoxycyclohexyl)ethylmethyldimethoxysilane, beta-(3,4-epoxycyclohexyl)ethyltriethoxysilane, beta-(3,4-epoxycyclohexyl)ethylmethyldiethoxysilane, epoxylimonyltrimethoxysilane, isocyanatopropyltriethoxysilane, isocyanatopropyltrimethoxysilane, isocyanatopropylmethyldimethoxysilane, beta-cyanoethyltrimethoxysilane, gamma-acryloxypropyltrimethoxysilane, gamma-methacryloxypropylmethyldimethoxysilane, alpha, omega-bis(aminoalkyldiethoxysilyl)polydimethylsiloxane (Pn=1 to 7), alpha, omega-bis(aminoalkyldiethoxysilyl)octamethyltetrasiloxane, 4-amino-3,3-dimethylbutyltrimethoxysilane, N-ethyl-3-trimethoxysilyl-2-methylpropanamine, 3-(N,N-diethylaminopropyl)trimethoxysilane, tris[3-(trimethoxysilyl)propyl]isocyanurate, methyltrimethoxysilane, vinyltrimethoxysilane and the like.

In one embodiment of the present application, a content of the adhesion promoter can be from 0.1% by weight to 5% by weight, and more preferably from 0.7% by weight to 3% by weight based on the total weight of the silicone-based composition. When satisfying such a content range of the adhesion promoter, more superior adhesive strength can be obtained. When the content of the adhesion promoter is less than 0.1% by weight based on the total weight of the silicone-based composition, adhesive strength is difficult to obtain, and the content being greater than 5% by weight is not preferred since viscosity of the silicone-based composition decreases changing the rheology itself, and adhesive strength no longer increases.

In one embodiment of the present application, the silicone-based composition can further comprise fumed silica, other additives and the like.

In one embodiment of the present application, a content of the fumed silica can be from 0% by weight to 15% by weight, and more preferably from 1% by weight to 10% by weight based on the total weight of the silicone-based composition. Comprising the fumed silica in such a content range can be effective in controlling viscosity and thixotropy of the silicone-based composition. However, when the fumed silica content is greater than 15% by weight based on the total weight of the silicone-based composition, a viscosity increase becomes greater, which can be disadvantageous in dispensing discharge workability, and this can be disadvantageous when using the composition in a coating material and the like requiring proper viscosity and thixotropy. In addition, the fumed silica content being greater than 1% by weight based on the total weight of the silicone-based composition can be advantageous for packages that needs to maintain the shape since a phenomenon of the composition spreading on the coating surface after dispensing discharge can be prevented.

As the fumed silica, using hydrophobic fumed silica having the silica surface being hydrophobized is more preferred. More specifically, hydrophobic fumed silica can be used as the fumed silica, however, the fumed silica is not limited thereto.

In one embodiment of the present application, the silicone-based composition can further comprise a second polyorganosiloxane known in the art in addition to the above-described polyorganosiloxane having both ends formed with an acrylate group and comprising at least one alkoxy group. The second polyorganosiloxane can not comprise both an ultraviolet curable functional group and a moisture curable functional group while having a general siloxane structure, and can comprise any one functional group of the ultraviolet curable functional group and the moisture curable functional group. The second polyorganosiloxane can perform a role of controlling mechanical properties of the silicone-based composition.

As the second polyorganosiloxane, a polyorganosiloxane comprising a vinyl group on both ends; a polyorganosiloxane selected from among a MQ resin, a MTQ resin, a MDQ resin and a MDTQ resin comprising an M unit (Me₃SiO), a D unit (Me₂SiO₂), a T unit (MeSiO₃), a Q unit (SiO₄) and the like without comprising both a ultraviolet curable functional group and a moisture curable functional group; a non-reactive polyorganosiloxane (M-Dn-M) and the like can be used, however, the second polyorganosiloxane is not limited thereto.

In one embodiment of the present application, a content of the second polyorganosiloxane can be from 0% by weight to 45% by weight, and more preferably from 0% by weight to 40% by weight based on the total weight of the silicone-based composition. When satisfying such a content range of the second polyorganosiloxane, adhesive strength can be properly controlled. In addition, when the second polyorganosiloxane content is greater than 45% by weight, the content of the polyorganosiloxane having both ends formed with an acrylate group and comprising at least one alkoxy group (polyorganosiloxane comprising the ultraviolet curable functional group and the moisture curable functional group at the same time) is relatively small. This is inconsistent with the purpose of the present application to apply the polyorganosiloxane comprising the ultraviolet curable functional group and the moisture curable functional group at the same time.

In addition, the cured product according to one embodiment of the present application is prepared by curing the silicone-based composition. More specifically, the cured product according to one embodiment of the present application can comprise a polyorganosiloxane having both ends formed with an acrylate group and comprising at least one alkoxy group; at least one type of an acryl-based monomer; at least one type of a photoinitiator; and a catalyst for moisture curing.

The cured product according to one embodiment of the present application can be formed using methods known in the art except for curing the above-described silicone-based composition. More specifically, the cured product can be formed using a method such as applying coating or printing the silicone-based composition on a substrate and a curing method, however, the method is not limited thereto.

Another embodiment of the present application provides a device comprising the cured product.

The cured product according to one embodiment of the present application can be used in applications of coating and protecting various objects. Particularly, the cured product can be effective in protecting objects comprising devices sensitive to external components such as moisture or humidity. Examples of the objects for which a coating material comprising the cured product can be used can comprise a photovoltaic device, a rectifier, a transmitter, an organic light emitting diode (OLED), a moisture protector for a printed circuit board, a solar cell, a secondary battery, an automotive component or the like, but are not limited thereto.

Hereinafter, the present specification will be described in more detail with reference to examples. However, the following examples are for illustrative purposes only, and the present specification is not limited thereto.

### <Example>

### <Preparation Example 1> Preparation of Polyorganosiloxane Represented by Chemical Formula 2

A mixture of bis silanol-end polydimethylsiloxane (5,000 cps, 1,000 g), acryloxypropyltrimethoxysilane (30 g), diisobutylamine (1.6 g), formic acid (0.57 g) and a butylhydroxytoluene (1.0 g) was stirred under nitrogen at 80 °C for 5 hours. Then, the mixture was stirred at 110 °C for 2 hours and then reduced pressure to remove by-products. Then, it was cooled to prepare a polyorganosiloxane represented by Chemical Formula 2. The prepared polyorganosiloxane had viscosity of approximately 6,000 cps based on 23°C.

### <Preparation Example 2> Preparation of Polyorganosiloxane Represented by Chemical Formula 3

A polyorganosiloxane represented by Chemical Formula 3 was prepared in the same manner as in Preparation Example 1 except that bis silanol-end polydimethyldiphenylsiloxane was used instead of the bis silanol-end polydimethylsiloxane. The prepared polyorganosiloxane had viscosity of approximately 13,000 cps based on 23°C.

### <Preparation Example 3> Preparation of Polyorganosiloxane Represented by Chemical Formula 2

A mixture of bis silanol-end polydimethylsiloxane (700 cps, 1,000 g), acryloxypropyltrimethoxysilane (60 g), diisobutylamine (3.2 g), formic acid (1.14 g) and a butylhydroxytoluene (1.0 g) was stirred under nitrogen at 80 °C for 5 hours. Then, the mixture was stirred at 110 °C for 2 hours and then reduced pressure to remove by-products. Then, it was cooled to prepare a polyorganosiloxane represented by Chemical Formula 2. The prepared polyorganosiloxane had viscosity of approximately 1,000 cps based on 23°C.

### <Comparative Preparation Example 1> Preparation of Polyorganosiloxane Having Both Ends Formed with Methacrylate Group

A polyorganosiloxane comprising a methacrylate group on both ends was prepared in the same manner as in Preparation Example 1 except that methacryloxypropyltrimethoxysilane was used instead of acryloxypropyltrimethoxysilane. The prepared polyorganosiloxane had viscosity of approximately 15,000 cps based on 23°C.

### <Comparative Preparation Example 2>

Acrylate-end polydimethylsiloxane (available from Momentive Performance Materials Inc.) was prepared. The acrylate-end polydimethylsiloxane had viscosity of approximately 7,500 cps based on 23°C.

### <Examples 1 to 36 and Comparative Examples 1 to 9>

Silicone-based compositions were each prepared by mixing an acryl-based monomer and a photoinitiator described in the following Tables 1 to 10, and then further mixing constituents described in the following Tables 1 to 10.

**[Table 1]**

| Constituent | Type | Content (% by Weight) | | | | |
|---|---|---|---|---|---|---|
| | | Example 1 | Example 2 | Example 3 | Example 4 | Example 5 |
| Polyorganosiloxane (A) | Preparation Example 1 | 60.00 | 74.41 | 74.41 | 74.41 | 74.41 |
| | Preparation Example 2 | - | - | - | - | - |
| Acryl-based Monomer (B) | B-1 | 34.82 | 17.41 | 17.41 | 17.41 | 17.41 |
| | B-2 | - | - | - | - | - |
| | B-3 | - | - | - | - | - |
| Photoinitiator (C) | C-1 | 1.00 | 1.00 | - | - | 0.25 |
| | C-2 | - | - | 1.00 | - | - |
| | C-3 | - | - | - | 0.50 | 0.25 |
| | C-4 | - | - | - | 0.50 | - |
| Catalyst for Moisture Curing (D) | D-1 | 0.10 | 0.1 | 0.1 | 0.1 | 0.2 |
| | D-2 | - | - | - | - | - |
| Scavenger (E) | | 2.50 | 2.50 | 2.50 | 2.50 | 2.50 |
| Adhesion Promoter (F) | F-1 | 0.58 | 0.58 | 0.58 | 0.58 | 0.40 |
| | F-2 | 1.00 | 1.00 | 1.00 | 1.00 | 1.58 |
| | F-3 | - | - | - | - | - |
| Fumed Silica (G) | | - | 3.0 | 3.0 | 3.0 | 3.0 |

**[Table 2]**

| Constituent | Type | Content (% by Weight) | | | | |
|---|---|---|---|---|---|---|
| | | Example 6 | Example 7 | Example 8 | Example 9 | Example 10 |
| Polyorganosiloxane (A) | Preparation Example 1 | 74.41 | 60.00 | 91.82 | 85.82 | 64.00 |
| | Preparation Example 2 | - | - | - | - | - |
| Acryl-based Monomer (B) | B-1 | 17.41 | 28.82 | 3.00 | 3.00 | 3.00 |
| | B-2 | - | - | - | - | 27.82 |
| | B-3 | - | - | - | - | - |
| Photoinitiator (C) | C-1 | - | 1.00 | 1.00 | 1.00 | 1.00 |
| | C-2 | 0.25 | - | - | - | - |
| | C-3 | - | - | - | - | - |
| | C-4 | 0.25 | - | - | - | - |
| Catalyst for Moisture Curing (D) | D-1 | 0.20 | 0.10 | 0.10 | 0.10 | 0.10 |
| | D-2 | - | - | - | - | - |
| Scavenger (E) | | 2.50 | 2.50 | 2.50 | 2.50 | 2.50 |
| Adhesion Promoter (F) | F-1 | 0.40 | 0.58 | 0.58 | 0.58 | 0.58 |
| | F-2 | 1.58 | 1.00 | 1.00 | 1.00 | 1.00 |
| | F-3 | - | - | - | - | - |
| Fumed Silica (G) | | 3.00 | 6.00 | - | 6.00 | - |

**[Table 3]**

| Constituent | Type | Content (% by Weight) | | | | |
|---|---|---|---|---|---|---|
| | | Example 11 | Example 12 | Example 13 | Example 14 | Example 15 |
| Polyorganosiloxane (A) | Preparation Example 1 | 64.00 | - | 74.24 | 78.90 | - |
| | Preparation Example 2 | - | 54.00 | - | - | 62.05 |
| Acryl-based Monomer (B) | B-1 | 18.00 | 28.00 | 17.65 | 3.00 | 17.65 |
| | B-2 | 12.82 | 7.76 | - | 7.00 | - |
| | B-3 | - | - | - | - | 15.00 |
| Photoinitiator (C) | C-1 | 1.00 | 1.00 | 1.00 | 1.00 | 0.50 |
| | C-2 | - | - | - | - | - |
| | C-3 | - | - | - | - | 0.50 |
| | C-4 | - | - | - | - | - |
| Catalyst for Moisture Curing (D) | D-1 | 0.10 | 0.16 | 0.10 | 0.10 | 0.22 |
| | D-2 | - | - | - | - | - |
| Scavenger (E) | | 2.50 | 2.50 | 2.50 | 1.00 | 2.50 |
| Adhesion Promoter (F) | F-1 | 0.58 | 0.58 | 0.58 | - | 0.58 |
| | F-2 | 1.00 | 1.00 | 1.00 | 1.00 | 1.00 |
| | F-3 | - | - | - | - | - |
| Fumed Silica (G) | | - | - | - | 3.00 | - |
| Second Polyoiganosiloxane (H) | H-1 | - | - | 2.93 | - | - |
| | H-2 | - | - | - | 5.00 | - |
| | H-3 | - | 5.00 | - | - | - |

**[Table 4]**

| Constituent | Type | Content (% by Weight) | | | |
|---|---|---|---|---|---|
| | | Example 16 | Example 17 | Example 18 | Example 19 |
| Polyorganosiloxane (A) | Preparation Example 1 | - | - | 78.7 | 77.20 |
| | Preparation Example 2 | 50.00 | 59.70 | - | - |
| Acryl-based Monomer (B) | B-1 | 15.36 | - | 10.00 | 17.65 |
| | B-2 | - | - | - | - |
| | B-3 | 29.32 | 35.00 | - | - |
| Photoinitiator (C) | C-1 | 1.00 | 1.00 | 0.50 | 1.00 |
| | C-2 | - | - | - | - |
| | C-3 | - | - | - | - |
| | C-4 | - | - | - | - |
| Catalyst for Moisture Curing (D) | D-1 | 0.22 | 0.22 | 0.22 | 0.07 |
| | D-2 | - | - | - | - |
| Scavenger (E) | | 2.50 | 2.50 | 1.50 | 2.50 |
| Adhesion Promoter (F) | F-1 | 0.60 | 0.58 | 0.58 | 0.58 |
| | F-2 | 1.00 | 1.00 | - | 1.00 |
| | F-3 | - | - | 1.00 | - |
| Fumed Silica (G) | | - | - | 7.50 | - |

**[Table 5]**

| Constituent | Type | Content (% by Weight) | | | | |
|---|---|---|---|---|---|---|
| | | Example 20 | Example 21 | Example 22 | Example 23 | Example 24 |
| Polyorganosiloxane (A) | Preparation Example 1 | 77.16 | 77.05 | 76.94 | 71.90 | 67.05 |
| | Preparation Example 2 | - | - | - | - | - |
| Acryl-based Monomer (B) | B-1 | 17.65 | 17.65 | 17.65 | 17.65 | 17.65 |
| | B-2 | - | - | - | - | - |
| | B-3 | - | - | - | - | - |
| Photoinitiator (C) | C-1 | 1.00 | 1.00 | 1.00 | 1.00 | 1.00 |
| | C-2 | - | - | - | - | - |
| | C-3 | - | - | - | - | - |
| | C-4 | - | - | - | - | - |
| Catalyst for Moisture Curing (D) | D-1 | 0.11 | 0.22 | 0.33 | 0.22 | 0.22 |
| | D-2 | - | - | - | - | - |
| Scavenger (E) | | 2.50 | 2.50 | 2.50 | 0.15 | 5.00 |
| Adhesion Promoter (F) | F-1 | 0.58 | 0.58 | 0.58 | 0.58 | 0.58 |
| | F-2 | 1.00 | 1.00 | 1.00 | 1.00 | 1.00 |
| | F-3 | - | - | - | - | - |
| Fumed Silica (G) | | - | - | - | 7.50 | 7.50 |

**[Table 6]**

| Constituent | Type | Content (% by Weight) | | | | |
|---|---|---|---|---|---|---|
| | | Example 25 | Example 26 | Example 27 | Example 28 | Example 29 |
| Polyorganosiloxane (A) | Preparation Example 1 | 72.22 | 72.32 | - | 95.52 | 49.90 |
| | Preparation Example 2 | - | - | - | - | - |
| | Preparation Example 3 | - | - | 72.20 | - | - |
| Acryl-based Monomer (B) | B-1 | 3.00 | 3.00 | 3.00 | 3.00 | 9.00 |
| | B-2 | - | - | - | - | - |
| | B-3 | - | - | - | - | - |
| Photoinitiator (C) | C-1 | - | - | 1.00 | 1.00 | 0.70 |
| | C-2 | 0.70 | 0.70 | - | - | - |
| | C-5 | 0.30 | 0.30 | - | - | 0.30 |
| Catalyst for Moisture Curing (D) | D-1 | 0.20 | - | 0.22 | 0.48 | - |
| | D-2 | - | - | - | - | - |
| | D-3 | - | 1.50 | - | - | 0.30 |
| Scavenger (E) | | 2.00 | - | 2.00 | - | 0.15 |
| Adhesion Promoter (F) | F-1 | 0.58 | 0.58 | 0.58 | - | 0.10 |
| | F-2 | 1.00 | 1.00 | 1.00 | - | 0.10 |
| Fumed Silica (G) | | - | - | - | - | - |
| Second Polyorganosiloxane (H) | H-4 | 20.00 | 20.60 | 20.00 | - | 39.45 |

**[Table 7]**

| Constituent | Type | Content (% by Weight) | | | | |
|---|---|---|---|---|---|---|
| | | Example 30 | Example 31 | Example 32 | Example 33 | Example 34 |
| Polyorganosiloxane (A) | Preparation Example 1 | - | 45.00 | 40.00 | 45.00 | 45.00 |
| | Preparation Example 2 | 78.20 | - | - | - | - |
| | Preparation Example 3 | - | 29.90 | 27.20 | 11.30 | 13.90 |
| Acryl-based Monomer (B) | B-1 | 9.00 | 15.00 | 9.00 | 17.00 | 17.00 |
| | B-2 | - | - | - | - | - |
| | B-3 | - | - | - | - | - |
| Photoinitiator (C) | C-1 | 1.00 | 2.00 | 1.00 | 0.70 | 0.70 |
| | C-2 | - | - | - | - | - |
| | C-5 | - | - | - | 0.30 | 0.30 |
| Catalyst for | D-1 | - | - | - | - | - |
| Moisture Curing (D) | D-2 | 4.80 | - | 2.40 | - | - |
| | D-3 | - | 3.00 | 2.40 | 2.10 | 2.10 |
| Scavenger (E) | | 2.00 | - | - | 1.00 | 1.00 |
| Adhesion Promoter (F) | F-1 | - | 0.30 | - | 0.80 | - |
| | F-2 | - | 1.80 | - | 1.80 | - |
| Fumed Silica (G) | | 5.00 | 3.00 | 3.00 | 5.00 | 5.00 |
| Second Polyorganosiloxane (H) | H-4 | - | - | 15.00 | 15.00 | 15.00 |

**[Table 8]**

| Constituent | Type | Content (% by Weight) | |
|---|---|---|---|
| | | Example 35 | Example 36 |
| Polyorganosiloxane (A) | Preparation Example 1 | 45.00 | 45.00 |
| | Preparation Example 2 | - | - |
| | Preparation Example 3 | 12.30 | 14.90 |
| Acryl-based Monomer (B) | B-1 | 17.00 | 17.00 |
| | B-2 | - | - |
| | B-3 | - | - |
| Photoinitiator (C) | C-1 | 0.70 | 0.70 |
| | C-2 | - | - |
| | C-5 | 0.30 | 0.30 |
| Catalyst for Moisture Curing (D) | D-1 | - | - |
| | D-2 | - | - |
| | D-3 | 2.10 | 2.10 |
| Scavenger (E) | | - | - |
| Adhesion Promoter (F) | F-1 | 0.80 | - |
| | F-2 | 1.80 | - |
| Fumed Silica (G) | | 5.00 | 5.00 |
| Second Polyorganosiloxane (H) | H-4 | 15.00 | 15.00 |

**[Table 9]**

| Constituent | Type | Content (% by Weight) | | | | |
|---|---|---|---|---|---|---|
| | | Comparative Example 1 | Comparative Example 2 | Comparative Example 3 | Comparative Example 4 | Comparative Example 5 |
| Polyorganosiloxane (A) | Preparation Example 1 | 77.26 | 77.24 | 63.75 | 61.20 | - |
| | Preparation Example 2 | | | | | |
| | Comparative Preparation Example 1 | - | - | - | - | - |
| | Comparative Preparation Example 2 | - | - | - | - | 77.17 |
| Acryl-based Monomer (B) | B-1 | 17.65 | 17.65 | 3.00 | 34.42 | 17.65 |
| | B-2 | - | - | 27.82 | - | - |
| | B-3 | - | - | - | - | - |
| Photoinitiator (C) | C-1 | 1.00 | 1.00 | 1.00 | 1.00 | 1.00 |
| | C-2 | - | - | - | - | - |
| | C-3 | - | - | - | - | - |
| | C4 | - | - | - | - | - |
| Catalyst for Moisture Curing (D) | D-1 | 0.01 | 0.03 | - | - | 0.10 |
| | D-2 | - | - | - | 0.05 | - |
| | D-3 | - | - | 0.05 | - | - |
| Scavenger (E) | | 2.50 | 2.50 | 2.55 | 1.50 | 2.50 |
| Adhesion Promoter (F) | F-1 | 0.58 | 0.58 | 0.58 | 0.58 | 0.58 |
| | F-2 | 1.00 | 1.00 | 1.25 | 1.25 | 1.00 |
| | F-3 | - | - | - | - | - |

**[Table 10]**

| Constituent | Type | Content (%by Weight) | | | |
|---|---|---|---|---|---|
| | | Comparative Example 6 | Comparative Example 7 | Comparative Example 8 | Comparative Example 9 |
| Polyorganosiloxane (A) | Preparation Example 1 | | | | |
| | Preparation Example 2 | | | | |
| | Comparative Preparation Example 1 | - | 77.17 | 60.00 | 91.82 |
| | Comparative Preparation Example 2 | 91.82 | - | - | - |
| Acryl-based Monomer (B) | B-1 | 3.00 | 17.65 | 34.82 | 3.00 |
| | B-2 | - | - | - | - |
| | B-3 | - | - | - | - |
| Photoinitiator (C) | C-1 | 1.00 | 1.00 | 1.00 | 1.00 |
| | C-2 | - | - | - | - |
| | C-3 | - | - | - | - |
| | C-4 | - | - | - | - |
| Catalyst for Moisture Curing (D) | D-1 | 0.10 | 0.10 | 0.10 | 0.10 |
| | D-2 | - | - | - | - |
| | D-3 | - | - | - | - |
| Scavenger (E) | | 2.50 | 2.50 | 2.50 | 2.50 |
| Adhesion Promoter (F) | F-1 | 0.58 | 0.58 | 0.58 | 0.58 |
| | F-2 | 1.00 | 1.00 | 1.00 | 1.00 |
| | F-3 | - | - | - | - |

Types of the constituents in Table 1 to Table 10 are as follows.
Acryl-based monomer B-1: Isobomyl acrylate
Acryl-based monomer B-2: Lauryl acrylate
Acryl-based monomer B-3: 1,6-Hexanediol diacrylate
Photoinitiator C-1: Omnirad BDK (2,2-Dimethoxy-2-phenylacetophenone)
Photoinitiator C-2: Omnirad 1173 (2-Hydroxy-2-methyl-1-phenylpropanone)
Photoinitiator C-3: Omnirad TPO-L (Ethyl(2,4,6-trimethylbenzoyl)phenyl phosphinate)
Photoinitiator C-4: Omnirad 184 (1-Hydroxycyclohexyl-phenylketone)
Photoinitiator C-5: Omnirad 819 (bis(2,4,6-trimethylbenzoyl)phenylphosphine oxide
Catalyst for moisture curing D-1: Dibutyltin bis(acetylacetonate)
Catalyst for moisture curing D-2: Tetra-n-butyl titanate
Catalyst for moisture curing D-3: tetra-tert-butyl orthotitanate
Scavenger E: 3-(Trimethoxysilyl)-1-propanamine polymer with 1,1,1-trimethyl-N-(trimethylsilyl) silanamine
Adhesion promoterF-1: Tris[3-(trimethoxysilyl)propyl] isocyanurate
Adhesion promoter F-2: Methyltrimethoxysilane
Adhesion promoter F-3: Vinyltrimethoxysilane
Fumed Silica G: Evonik RX200
Second polyorganosiloxane H-1: Polydimethylsiloxane comprising a vinyl group on both ends and side chain (viscosity is 1,000,000 cps based on 23°C)
Second polyorganosiloxane H-2: Polydimethylsiloxane comprising a vinyl group on both ends (viscosity is 100,000 cps based on 23°C)
Second polyorganosiloxane H-3: Polydimethylsiloxane comprising a vinyl group on both ends, and having a phenyl group content of 10% (viscosity is 1,000 cps based on 23°C)
Second polyorganosiloxane H4: Polyorganosiloxane consisting of 50 wt% of a resin with an alkoxy-terminated MQ structure and 50 wt% of a polymer (viscosity is 200 cps) containing an alkoxy group at both ends

### <Experimental Example>

Properties of each of the silicone-based compositions prepared in the examples and the comparative examples were evaluated, and the results are shown in the following Table 11.

**[Table 11]**

| | Properties | | | | | | | |
|---|---|---|---|---|---|---|---|---|
| | (1) | (2) | (3) | (4) | (5) | (6) | (7) | (8) |
| Example 1 | 30 | 1.4 | 1.0 | 2.9 | 5.3 | 213 | 2.9 | 44 |
| Example 2 | 30 | 5.8 | 1.2 | 3.6 | 2.2 | 179 | 1.4 | 35 |
| Example 3 | 30 | 5.9 | 1.2 | 3.5 | 1.8 | 164 | 1.3 | 38 |
| Example 4 | 30 | 5.7 | 1.2 | 3.7 | 2.1 | 186 | 1.2 | 37 |
| Example 5 | 30 | 5.7 | 1.2 | 3.6 | 2.1 | 177 | 1.3 | 37 |
| Example 6 | 30 | 5.8 | 1.2 | 3.6 | 2.1 | 176 | 1.0 | 37 |
| Example 7 | 30 | 5.9 | 1.4 | 2.9 | 5.2 | 210 | 2.4 | 56 |
| Example 8 | 30 | 6.4 | 1.0 | 4.5 | 0.4 | 146 | 0.3 | 20 |
| Example 9 | 30 | 20.7 | 1.4 | 4.3 | 1.1 | 173 | 0.5 | 30 |
| Example 10 | 20 | 1.3 | 1.0 | 3.5 | 0.6 | 171 | 0.2 | 14 |
| Example 11 | 20 | 1.3 | 1.0 | 3.6 | 0.9 | 188 | 0.3 | 19 |
| Example 12 | 30 | 1.4 | 1.0 | 5.9 | 2.6 | 123 | 0.3 | 29 |
| Example 13 | 25 | 5.9 | 1.05 | 3.7 | 1.6 | 168 | 1.0 | 30 |
| Example 14 | 25 | 16.7 | 1.4 | 5.1 | 0.6 | 151 | 0.4 | 17 |
| Example 15 | 30 | 1.8 | 1.0 | 2.5 | 2.2 | 34 | 1.1 | 67 |
| Example 16 | 35 | 1.0 | 1.0 | 2.8 | 3.9 | 19 | 1.2 | 70 |
| Example 17 | 30 | 1.8 | 1.0 | 5.9 | 6.1 | 131 | 1.6 | 78 |
| Example 18 | 15 | 12.8 | 1.3 | 6.4 | 1.5 | 114 | 1.0 | 40 |
| Example 19 | 55 | 3.1 | 1.0 | 3.1 | 1.2 | 167 | 1.1 | 28 |
| Example 20 | 30 | 3.1 | 1.0 | 3.0 | 1.3 | 160 | 1.5 | 30 |
| Example 21 | 15 | 3.2 | 1.0 | 3.1 | 1.1 | 119 | 1.2 | 30 |
| Example 22 | 10 | 3.4 | 1.0 | 3.2 | 1.3 | 157 | 1.1 | 30 |
| Example 23 | 35 | 12.9 | 1.5 | 3.3 | 2.6 | 162 | 1.8 | 34 |
| Example 24 | 30 | 13.5 | 1.5 | 3.1 | 2.8 | 151 | 2.1 | 43 |
| Example 25 | 15 | 7.3 | 1.0 | 5.4 | 1.2 | 150 | 0.6 | 20 |
| Example 26 | 25 | 5.9 | 1.0 | 6.3 | 0.8 | 140 | 0.5 | 20 |
| Example 27 | 20 | 1.4 | 1.0 | 4.5 | 0.5 | 60 | 0.3 | 31 |
| Example 28 | 5 | 9.4 | 1.0 | 7.1 | 0.3 | 222 | 0.15 | 11 |
| Example 29 | 55 | 1.3 | 1.1 | 4.5 | 0.3 | 116 | 0.4 | 12 |
| Example 30 | 30 | 24.2 | 1.2 | 3.4 | 0.6 | 120 | 0.4 | 14 |
| Example 31 | 25 | 2.6 | 1.1 | 2.6 | 2.4 | 162 | 1.3 | 35 |
| Example 32 | 5 | 1.4 | 1.5 | 3.9 | 2.0 | 148 | 0.6 | 39 |
| Example 33 | 50 | 6.7 | 1.3 | 2.0 | 2.4 | 235 | 0.7 | 27 |
| Example 34 | 40 | 11.8 | 1.4 | 2.6 | 2.5 | 230 | 0.4 | 36 |
| Example 35 | 30 | 3.8 | 1.1 | 2.2 | 2.9 | 141 | 1.1 | 50 |
| Example 36 | 5 | 5.5 | 1.1 | 3.1 | 3.4 | 224 | 0.9 | 43 |
| Comparative Example 1 | 290 | 3.1 | 1.0 | 3 | 1.0 | 187 | 1.1 | 20 |
| Comparative Example 2 | 170 | 3.0 | 1.0 | 3.1 | 1.0 | 161 | 1.1 | 25 |
| Comparative Example 3 | >24hrs | 1.2 | 1.0 | 0.6 | X | X | 0.1 | X |
| Comparative Example 4 | >24hrs | 1.4 | 1.0 | 2.2 | X | X | 0.2 | X |
| Comparative Example 5 | X | 5.83 | 1.0 | 3.7 | 0.6 | 431 | 0.3 | 1 |
| Comparative Example 6 | X | 11.6 | 1.0 | X | X | X | X | X |
| Comparative Example 7 | 75 | 5.85 | 1.0 | 3.2 | 0.5 | 144 | 0.5 | 15 |
| Comparative Example 8 | 75 | 2.45 | 1.0 | 3.21 | 5.0 | 210 | 2.4 | 35 |
| Comparative Example 9 | 75 | 11.5 | 1.0 | X | 0.3 | 167 | 0.3 | 10 |

In Table 11, the evaluation result of "X" means that the property evaluation results were not able to be measured due to failure of curing, or the range was outside the measurement range.

As shown from the results, it was identified that a fast tack free time was not provided when the content range was outside the range of the catalyst for moisture curing comprising a tin-based compound of the present application (Comparative Examples 1 and 2).

In Comparative Examples 3 and 4, curing was obtained by ultraviolet irradiation, however, moisture curing was not conducted thereafter, and the product was prepared at a gel level instead of having rubber properties. This is due to the result that the content range was outside the range of the catalyst for moisture curing comprising a titanate-based compound of the present application.

In Comparative Examples 5 and 6, the polyorganosiloxane did not comprise a moisture curable functional group, and the product was prepared at a gel level without being rubberized.

In Comparative Examples 7 to 9, the polyorganosiloxane had both ends formed with a methacrylate group instead of an acrylate group as in the present application, which resulted in a tack free time of longer than 60 minutes, and in this case, the goal of rapid process development that the present application aimed to achieve was not accomplished.

Accordingly, it was identified that the silicone-based composition according to one embodiment of the present application was able to be quickly cured using ultraviolet (UV) light, and was sufficiently cured using a moisture curing method even for areas not irradiated with ultraviolet light.

In addition, by comprising a polyorganosiloxane having both ends formed with an acrylate group and comprising at least one alkoxy group; and at least one type of an acryl-based monomer at the same time, the silicone-based composition according to one embodiment of the present application can have properties of silicone rubber, can variously control adhesive strength, and can provide a quick tack free time on the surface just by moisture curing.

Types of the properties in Table 11 and the measurement methods thereof are as follows.

### <Property (1): Surface Tack Free Time (min)>

After discharging the sample overflowingly to a width of 50 mm, a length of 50 mm and a depth of 2 mm, the depth was adjusted by cutting off the top surface using a spatula. A timer was immediately started, and by touching the surface with a fingertip every 5 minutes, the time at which the sample did not smear was measured. The experiment was conducted under a condition of 25°C and 50 RH%.

### <Property (2): Viscosity (Pa.s)>

Viscosity was measured at 20 rpm under a 23°C condition after setting to gap=0.5 mm using a spindle PP-25 of Anton-Paar rheometer.

### <Property (3): Thixotropy>

Thixotropy was obtained in a ratio between the measured value at 10 rpm and the measured value at 20 rpm using a rheometer.

### <Property (4): UV Curing Depth (mm)>

After discharging the sample overflowingly to a width of 20 mm, a length of 20 mm and a depth of 10 mm, the depth was adjusted by cutting off the top surface using a spatula. A UV lamp of LED 365 nm was used, and the sample was UV cured by being exposed to 5,000 mJ/cm².

After the UV irradiation, the spacer was dissembled, and after wiping the uncured lower part, the result was kept for 3 days at 25°C and 50 RH%. The thickness of the cured product was obtained by measuring with a micrometer.

### <Property (5): Tensile Force (MPa)>

A specimen cured to a thickness of 2 mm was prepared. Herein, the specimen was cured under a curing condition of UV 5,000 mJ/cm², and kept for 3 days at 25°C and 50 RH%.

The specimen was cut to a dog-bone, and locked on an Instron tester to measure tensile force.

### <Property (6): Elongation (%)>

A specimen cured to a thickness of 2 mm was prepared. Herein, the specimen was cured under a curing condition of UV 5,000 mJ/cm², and kept for 3 days at 25°C and 50 RH%.

The specimen was cut to a dog-bone, and locked on an Instron tester to measure elongation.

### <Property (7): Adhesive Strength (MPa)>

Adhesive strength was measured using a lap shear measurement method, and herein, FR4, glass was employed as a material. The sample thickness was employed to be 1 T. Herein, the specimen was cured under a curing condition of UV 5,000 mJ/cm², and kept for 3 days at 25°C and 50 RH%.

### <Property (8): Hardness (Shore A)>

A specimen cured to a thickness of 2 mm was prepared. Herein, the specimen was cured under a curing condition of UV 5,000 mJ/cm², and kept for 3 days at 25°C and 50 RH%. Three 2 mm specimens were stacked to make a total of 6 mm, and hardness was measured with Durometer shore A.

## Claims

1. A silicone-based composition comprising:
a polyorganosiloxane having both ends formed with an acrylate group and comprising at least one alkoxy group in 40% by weight or greater,
at least one type of an acryl-based monomer in 0.1% by weight to 50% by weight;
at least one type of a photoinitiator in 0.1% by weight to 5% by weight; and
a catalyst for moisture curing,
based on a total weight of the silicone-based composition.

2. The silicone-based composition of claim 1, wherein the polyorganosiloxane is represented by the following Chemical Formula 1: 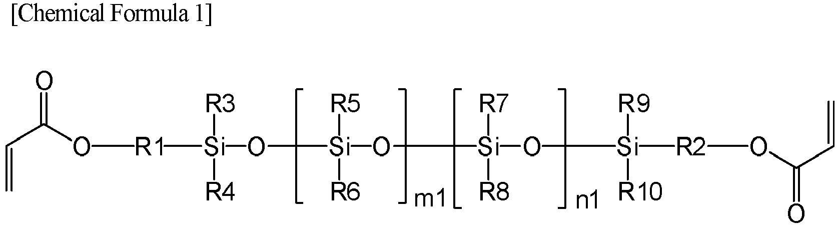 in Chemical Formula 1,
R1 and R2 are the same as or different from each other, and each independently a substituted or unsubstituted alkylene group having 1 to 10 carbon atoms;
R5 and R6 are the same as or different from each other, and each independently an alkyl group having 1 to 10 carbon atoms,
at least one of R3, R4, R9 and R10 is an alkoxy group having 1 to 10 carbon atoms, and the rest are the same as or different from each other, and each independently an alkyl group having 1 to 10 carbon atoms, or an alkoxy group having 1 to 10 carbon atoms,
R7 and R8 are the same as or different from each other, and each independently an aryl group having 6 to 20 carbon atoms; and
m1 and n1 are each independently a real number of 0 or greater.

3. The silicone-based composition of claim 2, wherein Chemical Formula 1 is represented by the following Chemical Formula 2 or 3: 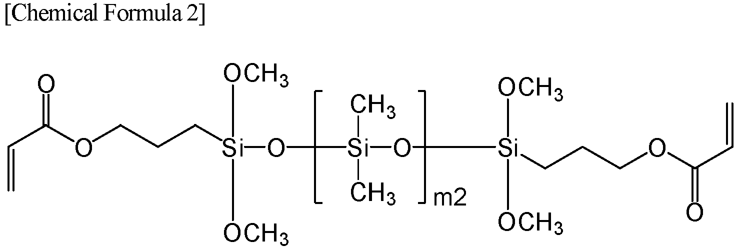 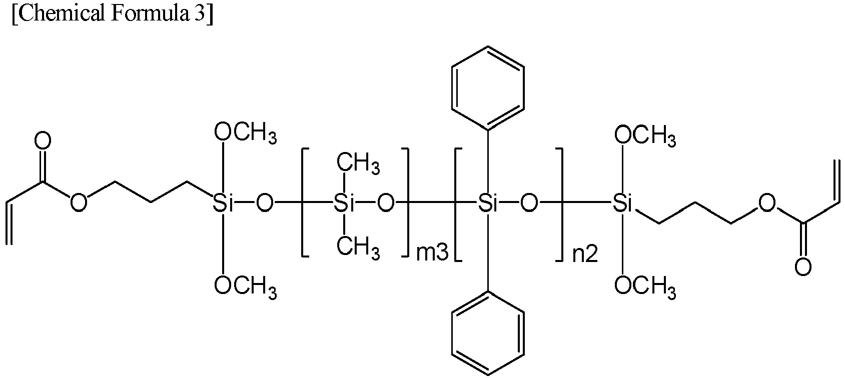 in Chemical Formulae 2 and 3,
m2, m3 and n2 are each independently a real number of 1 or greater.

4. The silicone-based composition of claim 1, wherein the polyorganosiloxane has viscosity of 10 cps to 100,000 cps based on 23°C.

5. The silicone-based composition of claim 1, wherein the acryl-based monomer comprises at least one type of isobomyl acrylate, lauryl acrylate and 1,6-hexanediol diacrylate.

6. The silicone-based composition of claim 1, wherein the catalyst for moisture curing comprises at least one of a tin-based compound and a titanate-based compound.

7. The silicone-based composition of claim 6, wherein the catalyst for moisture curing comprises the tin-based compound, and
wherein a content of the tin-based compound is from 0.05% by weight to 0.5% by weight based on the total weight of the silicone-based composition.

8. The silicone-based composition of claim 6, wherein the catalyst for moisture curing comprises the titanate-based compound, and
wherein a content of the titanate-based compound is from 0.1% by weight to 5.0% by weight based on the total weight of the silicone-based composition.

9. The silicone-based composition of claim 1, further comprising an additive including at least one of a scavenger and an adhesion promoter.

10. The silicone-based composition of claim 9, wherein the scavenger comprises a compound represented by the following Chemical Formula 4: 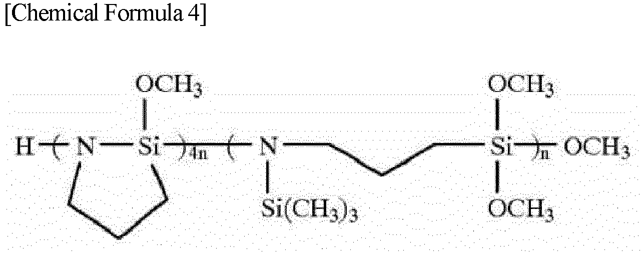 in Chemical Formula 4,
n is a real number of 1 to 20.

11. The silicone-based composition of claim 9, wherein the adhesion promoter comprises at least one type of (aminoalkyl)trialkoxysilane, (aminoalkyl)alkyldialkoxysilane, bis(trialkoxysilylalkyl)amine, tris(trialkoxysilylalkyl)amine, tris(trialkoxysilylalkyl)cyanurate, tris(trialkoxysilylalkyl)isocyanurate, (epoxyalkyl)trialkoxysilane and (epoxyalkyl ether)trialkoxysilane.

12. The silicone-based composition of claim 1, further comprising at least one type of fumed silica and a second polyorganosiloxane.

13. The silicone-based composition of claim 1, a tack free time of the silicone-based composition is 60 minutes or shorter.

14. A cured product prepared by curing the silicone-based composition of any one of claims 1 to 13.

15. A device comprising the cured product of claim 14.

16. The device of claim 15, wherein the device is a photovoltaic device, a rectifier, a transmitter, an organic light emitting diode, a moisture protector for a printed circuit board, a solar cell, a secondary battery or an automotive component.
